# EUROPÄISCHE PATENTSCHRIFT

(11) **EP 2 785 990 B1**
(45) Veröffentlichungstag und Bekanntmachung des Hinweises auf die Patenterteilung: **02.03.2016**
(21) Anmeldenummer: 12791184.0
(22) Anmeldetag: 26.11.2012
(51) Int. Cl.: F01N 3/20

(54) **VORRICHTUNG ZUR BEREITSTELLUNG VON REDUKTIONSMITTEL**
DEVICE FOR PROVIDING REDUCING AGENT
DISPOSITIF D'ALIMENTATION EN AGENT RÉDUCTEUR

(30) Priorität: 30.11.2011 DE 102011119772
(43) Veröffentlichungstag der Anmeldung: 08.10.2014
(73) Patentinhaber: Continental Automotive GmbH, 30165 Hannover (DE)
(72) Erfinder: HODGSON, Jan, 53840 Troisdorf (DE); SCHEPERS, Sven, 53844 Troisdorf (DE)
(86) Internationale Anmeldenummer: PCT/EP2012/073636
(87) Internationale Veröffentlichungsnummer: WO 2013/079449

(56) Entgegenhaltungen:
- DE-A1-102010 014 314
- FR-A1- 2 918 718

## Beschreibung

Die Erfindung betrifft eine Vorrichtung zur Bereitstellung von Reduktionsmittel aus einem Reduktionsmitteltank umfassend eine Fördereinheit.

Insbesondere bei Kraftfahrzeugen werden Abgasbehandlungsvorrichtungen zur Reinigung der Abgase einer Verbrennungskraftmaschine eingesetzt, in welchen dem Abgas ein Fluid zugeführt wird. Ein besonders häufig in derartigen Abgasbehandlungsvorrichtungen angewandtes Abgasreinigungsverfahren ist das Verfahren der selektiven katalytischen Reduktion (SCR-Verfahren; SCR = selective catalytic reduction), bei welchem dem Abgas ein Reduktionsmittel zugeführt wird, unter dessen Zuhilfenahme Stickstoffoxidverbindungen im Abgas reduziert werden. Ein häufig eingesetztes Reduktionsmittel in diesem Zusammenhang ist Ammoniak. Ammoniak wird in Kraftfahrzeugen meist nicht direkt bevorratet, sondern z. B. in Form einer Reduktionsmittelvorläuferlösung, welche im Abgas und/oder außerhalb des Abgases in Ammoniak umgewandelt werden kann. Eine besonders häufig eingesetzte Reduktionsmittelvorläuferlösung ist Harnstoff-Wasser-Lösung. Eine für die Abgasreinigung häufig verwendete Harnstoff-Wasser-Lösung weist einen Harnstoffanteil von 32,5 % auf und ist z. B. unter dem Handelsnamen AdBlue^{®} erhältlich. Die Begriffe "Reduktionsmittel" und "Reduktionsmittelvorläufer" bzw. "Reduktionsmittelvorläuferlösung" werden im Folgenden synonym füreinander verwendet.

Bei der Speicherung und Förderung von Reduktionsmittel in einem Kraftfahrzeug ist regelmäßig zu beachten, dass Reduktionsmittel einfrieren kann. Die Reduktionsmittelvorläuferlösung AdBlue^{®} friert beispielsweise bei Temperaturen von -11 °C ein. Derart niedrige Temperaturen können im Kraftfahrzeugbereich beispielsweise während langer Stillstandzeiten auftreten. Ein Tank für Reduktionsmittel sowie eine Fördereinheit für das Reduktionsmittel sollten daher so ausgelegt sein, dass sie durch Einfrieren des Reduktionsmittels nicht beschädigt werden. Gleichzeitig ist es insbesondere für den Kraftfahrzeugbereich wichtig, dass eine Vorrichtung zur Bereitstellung von Reduktionsmittel als zusätzliches Tanksystem möglichst kostengünstig ist.

Die FR 2 918 718 A1 offenbart eine Pumpe zum Pumpen eines Fluids in einem an einem Fahrzeug angebauten System mit einem Filter, der unterhalb eines Deckels angeordnet ist.

Die DE 10 2010 014 314 A1 offenbart eine Vorrichtung zur Bereitstellung von flüssigem Reduktionsmittel aufweisend einen Tank mit einem Innenraum und einem in dem Innenraum des Tanks angeordneten Behälter, in dem sich eine Fördereinheit zur Förderung von flüssigem Reduktionsmittel aus dem Tank befindet, wobei der Behälter außen von einem Filter umgeben ist.

Hiervon ausgehend ist es Aufgabe der hier vorliegenden Erfindung, die im Zusammenhang mit dem Stand der Technik geschilderten technischen Probleme zu lösen bzw. zu lindern. Es soll insbesondere eine besonders kostengünstige und besonders einfrierbeständige Vorrichtung zur Bereitstellung von Reduktionsmittel vorgestellt werden.

Diese Aufgaben werden gelöst mit einer Vorrichtung gemäß den Merkmalen des Patentanspruchs 1. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Vorrichtung zur Bereitstellung von flüssigem Reduktionsmittel, aufweisend einen Tank, eine zumindest teilweise in dem Tank angeordnete Fördereinheit mit einer Ansaugstelle, durch welche die Fördereinheit Reduktionsmittel aus dem Tank ansaugen kann, und mit einem Filter, welcher die Ansaugstelle bedeckt, wobei ein Zwischenraum zwischen der Fördereinheit und dem Filter ausgebildet ist und wobei der Filter derart an der Fördereinheit angeordnet ist, dass dieser eine Ausweichbewegung weg von der Ansaugstelle ausführen kann, wenn sich im Zwischenraum Eis bildet, wobei die Fördereinheit eine Grundform und eine sich in die Grundform hinein erstreckende umlaufende Ausnehmung hat, in welcher sich die Ansaugstelle und der Filter befindet wobei die Ausnehmung mit einem abgeschrägten oberen Bereich ausgeführt ist, so dass für Luftblasen von jeder beliebigen Stelle des Zwischenraums aus ein Strömungspfad aus dem Zwischenraum in den Tank existiert, der ausgehend von der beliebigen Stelle hin zu dem Tank kontinuierlich ansteigt.

Die Fördereinheit weist vorzugsweise eine separate oder abgetrennte Kammer auf, welche sich in dem Tank befindet und welche im Wesentlichen frei von Reduktionsmittel ist (ausgenommen die darin konkret vorgesehenen Komponenten und Leitungen zur Förderung). Die Kammer ist in einer Tankwand oder im Tankboden angeordnet. Bevorzugt ist die

Kammer im Tankboden angeordnet. Die Kammer kann Bestandteil der Tankwand oder des Tankbodens sein bzw. die Tankwand oder den Tankboden fortsetzen. Die Kammer erstreckt sich vorzugsweise ausgehend von dem Tankboden in einen Tankinnenraum des Tanks hinein hin zu einer Oberseite des Tanks, allerdings bevorzugt nicht über die gesamte Tankhöhe, sondern z. B. maximal 30 % oder sogar nur maximal 15 % der Tankhöhe ausgehend vom Tankboden. Im Tankboden kann eine Öffnung vorgesehen sein. Die Fördereinheit kann dann mit der Kammer in diese Öffnung eingesetzt sein, so dass die Kammer Bestandteil des Tankbodens wird bzw. den Tankboden fortsetzt. Alternativ kann die Kammer integrierter Bestandteil des Tankbodens sein. Beispielsweise kann der Tankboden eine Einstülpung haben, welche die Kammer formt und welche durch einen Deckel verschließbar ist, damit der Tankboden und der Deckel zusammen ein Gehäuse für die Fördereinheit bilden.

Die Fördereinheit bzw. die Kammer weist zumindest eine Komponente auf, die für eine aktive Förderung des Reduktionsmittels aus dem Tank heraus (und ggf. deren Überwachung) zweckmäßig ist. Bevorzugt umfasst die Fördereinheit eine Pumpe, insbesondere in Kombination mit zumindest einer der folgenden Komponenten: Mindestens ein (regelbares) Ventil, mindestens ein Sensor zur Bestimmung von Druck und/oder Temperatur und/oder des Füllstandes von Reduktionsmittel im Tank, eine (regelbare, insbesondere elektrische) Heizung, und eine Kontrolleinheit für den Betrieb der Pumpe und/oder des Ventils und/oder des Sensors und/oder der Heizung. Ganz besonders bevorzugt ist in der Kammer selbst kein Filter zur Reinigung des Reduktionsmittels im Betrieb vorgesehen.

Die Fördereinheit und der Tank bzw. der Tankinnenraum des Tanks sind über die Ansaugstelle derart miteinander verbunden, dass das Reduktionsmittel aus dem Tank in die Fördereinheit einströmen kann. Um das Innere der Fördereinheit bzw. der Kammer vor Verunreinigungen in dem Reduktionsmittel zu schützen, befindet sich (außen, also im Tank) vor der Ansaugstelle der Filter. Der Filter trennt die Ansaugstelle vom übrigen Innenraum des Tanks (räumlich) ab. Dabei liegt der Filter bevorzugt nicht unmittelbar direkt an der Ansaugstelle an, sondern zwischen der Ansaugstelle und dem Filter ist (mindestens) ein Zwischenraum gebildet. Der Zwischenraum dient unter anderem dafür, dass von einer beliebigen Stelle des Filters aus Reduktionsmittel zu der Ansaugstelle strömen kann. Mit anderen Worten heißt das insbesondere, dass der Filter nicht nur die Ansaugstelle selbst bedeckt, sondern bevorzugt auch noch einen Umgebungsbereich (z. B. ein Vielfaches des Eintrittsquerschnittes der Ansaugleitung selbst, insbesondere zumindest das 10fache oder sogar zumindest das 50fache des Eintrittsquerschnittes der Ansaugleitung) bedeckt, und somit einen entsprechend großen Zwischenraum mit der Außenwand der Fördereinheit bzw. der Kammer bildet. Der Filter hat bevorzugt eine möglichst große Fläche, um einen geringen Strömungswiderstand für das Reduktionsmittel durch den Filter hindurch zu gewährleisten. Aus diesem Grund soll der Zwischenraum eine ausreichende Größe haben, um die Strömung bzw. Weiterleitung von Reduktionsmittel von dem Filter bzw. dem Umgebungsbereich zu der Ansaugstelle gewährleisten zu können. In dem Zwischenraum liegt damit aber auch Reduktionsmittel vor, welches einfrieren kann.

Ein sogenannter Einfrierdruck kann ausgehend vom Zwischenraum in den Tank beispielsweise dadurch entstehen, dass das Reduktionsmittel in dem Zwischenraum ausgehend von der Fördereinheit hin zum Filter und zum Tank gefriert (hier also eine gezielte Einfrierrichtung eingestellt ist). Das Reduktionsmittel im Zwischenraum in unmittelbarer Nähe der Fördereinheit sollte somit zuerst gefrieren. So kann in dem Zwischenraum durch das Einfrieren kein erhöhter Druck entstehen, weil die Volumenzunahme des Reduktionsmittels in den Zwischenraum hinein in den Tank abgeleitet wird bzw. der noch flüssige Anteil dorthin verdrängt wird. Erreicht werden kann ein solches Einfrierverhalten z. B. dadurch, dass die Fördereinheit bzw. die Kammer, in welcher sich die Fördereinheit befindet, eine Wärmeleitbrücke in den Tank darstellt. Im Einfrierfall wird dem Reduktionsmittel dann über die Kammer bzw. über die Fördereinheit Wärmeenergie entzogen, so dass sich zunächst an der Kammer bzw. an der Fördereinheit Eis bildet, welches sich von dort aus zum Filter und dann zum restlichen Tankinnenraum hin ausbreitet.

Der Filter ist nun so an der Fördereinheit positioniert, dass dieser eine Ausweichbewegung weg von der Ansaugstelle (bzw. auch zumindest teilweise weg von dem bedeckten Umgebungsbereich) ausführen kann, wenn sich im Zwischenraum Eis bildet und sich die Eisfront dann weiter in Richtung des Tanks ausdehnt. Das kann z. B. dadurch erreicht werden, dass der Filter sich ausgehend von der Fördereinheit hin zu dem Tank (räumlich begrenzt und bevorzugt reversibel beim Auftauvorgang) frei verschieben und/oder (räumlich begrenzt und bevorzugt reversibel beim Auftauvorgang) verformen kann. So kann der Filter beispielsweise in einer Führungsschiene gelagert sein, die die Ausgleichsbewegung zulässt. Weiter ist möglich, dass Expansionsmittel in der Halterung des Filters vorgesehen sind, die eine (reversible) Verformung des Filters ab einer vorgegebenen Krafteinwirkung (oberhalb des üblichen Strömungswiderstandes bei Betrieb) zulassen. Weiter können z. B. Dichtelemente zwischen Filter und Kammer vorgesehen sein, die flexibel sind und eine Ausgleichsbewegung des Filters zulassen. Insbesondere ist an dem Filter keine starre Haltestruktur vorgesehen, welche die Position und/oder die Form des Filters steif vorgibt. Wenn Reduktionsmittel in dem Zwischenraum einfriert und sich dabei ausdehnt, kann eine Zunahme des Volumens des (gefrorenen) Reduktionsmittels vorzugsweise durch eine Verformung bzw. durch eine Verschiebung des Filters in einfacher Weise kompensiert werden. Je nach Gestalt des Tanks bzw. der Fördereinheit im Bereich der Ansaugstelle und/oder der Einfrierrichtung im Betrieb kann der Filter gegebenenfalls auch (insbesondere abschnittsweise) eine Ausgleichsbewegung hin zur Fördereinheit ausführen, wobei er jedenfalls der Ansaugstelle selbst nicht näher kommt, insbesondere nicht in die Ansaugstelle selbst (also insbesondere nicht in einen Ansaugkanal) eindringt.

Unter einem "Einfrierdruck" wird hierbei insbesondere das Phänomen verstanden, dass während des Einfriervorgangs noch ein flüssiger Restanteil des Reduktionsmittels eingekesselt wird, z. B. durch einen voll umfassenden Eismantel oder zwischen einem Teil der Tankwand bzw. der Fördereinheit und einer Eisfront. Damit liegen jedenfalls starre Begrenzungen vor, die eine Volumenexpansion beim Frieren des Restanteils nicht ohne (massive) Druckerhöhung in diesem Bereich zulassen. Folglich kann in diesem Raum beim Einfrieren eine Druckspitze von z. B. deutlich über 20 bar oder sogar über 50 bar entstehen, die eine Beschädigung von Bauteilen im näheren oder weiteren Umfeld zur Folge haben könnte. Dieses Phänomen wird hier aber gezielt im Bereich der Ansaugstelle bzw. des Filters signifikant reduziert oder sogar vermieden.

Die Fördereinheit hat eine Grundform und eine sich in die Grundform hinein erstreckende Ausnehmung, in welcher sich die Ansaugstelle und der Filter befinden. Die Grundform wird vorzugsweise von einem Gehäuse der Kammer vorgegeben. Eine Grundform kann beispielsweise ein Zylinder oder ein Würfel oder eine sonstige ovale, eckige, etc. regelmäßige Form sein. Die Ausnehmung erstreckt sich ausgehend vom Tankinnenraum in die Grundform hinein. Die Ausnehmung bildet eine Fortsetzung des Tankinnenraums in die Grundform hinein. Damit bildet die Ausnehmung insbesondere eine lokale "Anomalität" oder Abweichung der Grundform aus.

Die Vorrichtung ist weiterhin vorteilhaft, wenn die Ausnehmung zumindest frei von Hinterschnitten ist oder sich zum Tank hin erweitert. Bevorzugt ist die Ausnehmung hinterschnittsfrei und sich erweiternd ausgeführt. Hinterschnitte wären Bereiche der Ausnehmung, in denen die Ausnehmung sich nach innen hin erweitert. Hinterschnitte treten also z. B. kombiniert mit einer Art Einschnürung der Ausnehmung mit Abstand zur Ansaugstelle auf. Eine hinterschnittsfreie Ausgestaltung der Ausnehmung verhindert, dass sich in der Ausnehmung ein Block aus eingefrorenem Reduktionsmittel bildet, welcher nicht in den Tankinnenraum hinein verschiebbar ist. Ein Reduktionsmittel-Eisblock in der Ausnehmung könnte bei einer Gestaltung der Ausnehmung mit Hinterschnitten in der Ausnehmung an den Hinterschnitten festsitzen. Genau dies wird durch eine hinterschnittsfreie Gestaltung der Ausnehmung vermieden. Auch kann die sich in Richtung weg von der Ansaugstelle erweiternde Ausgestaltung der Ausnehmung ein Verhaken eines sich in der Ausnehmung gebildeten Reduktionsmittel-Eisblocks und folglich auch die Gefahr eines unerwünscht hohen Eisdrucks nahe der Ansaugstelle deutlich reduzieren oder sogar vollständig vermeiden.

Außerdem ist die Vorrichtung vorteilhaft, wenn der Filter ein Hohlfilter ist, welcher eine Innenseite und eine Außenseite hat, und die Innenseite des Filters hin zum Tank geöffnet ist, während die Außenseite hin zum Zwischenraum angeordnet ist. Normalerweise wird ein Hohlfilter von der Außenseite zu der Innenseite hin durchströmt. Hier wird nun vorgeschlagen, dass der Hohlfilter so angeordnet ist, dass dieser von einer Innenseite zu der Außenseite durchströmbar ist. Dies ist beispielsweise vorteilhaft, weil die von dem Hohlfilter gesammelten Rückstände und Verunreinigungen sich im Inneren des Hohlfilters sammeln, anstatt dass sie auf der Außenseite und damit im gesamten Tank verteilt abgelagert werden. Ein von innen nach außen durchströmter Hohlfilter kann daher gemeinsam mit den abgeschiedenen Rückständen und Verunreinigungen einfach ausgetauscht und/oder gereinigt werden. Zudem können auf den Hohlfilter einwirkende Kräfte ausgehend vom Zwischenraum (Eisfront) durch eine (reversible) Schrumpfbewegung ohne dauerhafte Schädigung aufgenommen werden.

Besonders vorteilhaft ist es weiter, wenn ein derartiger Hohlfilter in einer Ausnehmung angeordnet ist, welche sich in die Grundform bzw. das Gehäuse der Fördereinheit hinein erstreckt. Wenn die Fördereinheit eine Kammer umfasst, die in eine Öffnung im Tankboden eingesetzt ist, kann die Fördereinheit dann zusammen mit dem Hohlfilter und den Verunreinigungen aus der Öffnung herausgenommen und gewartet werden.

Zudem ist die Vorrichtung vorteilhaft, wenn der Hohlraum frei von Einbauten bzw. Eiskompensationselementen ist. Eisdruckkompensationselemente könnten beispielsweise flexible Wandabschnitte oder Einlagen in dem Zwischenraum sein, die durch eine eigene Verformung den Eisdruck aufnehmen könnten. Im vorliegenden Fall ist folglich z. B. die den Zwischenraum bildende Gehäusewand starr und der Zwischenraum frei von flexiblen Einlagen, Schwämmen, etc.

Die Wände der Fördereinheit bzw. des Tanks, die gemeinsam mit dem Filter den Zwischenraum begrenzen, sind vorzugsweise starr. Starr bedeutet insbesondere, dass keine flexiblen Bereiche der Wand vorgesehen sind, durch welche ein in dem Zwischenraum entstehender Eisdruck kompensiert werden könnte. Bei einer solchen Gestaltung muss der gesamte in dem Zwischenraum entstehende Eisdruck hin zu dem Filter und hin zum Tankinnenraum abgebaut werden. Wenn der Filter in einer Ausnehmung angeordnet ist, kann die Ableitung des Eisdrucks durch die hinterschnittsfreie Gestaltung der Ausnehmung sowie der Ausgleichsbewegung des Filters erreicht werden.

Auch besonders vorteilhaft ist die Vorrichtung, wenn der Filter nach Art eines Kegels geformt ist. Der Filter kann in einer alternativen Ausgestaltung auch nach Art eines Zylinders (Hohlfilters) geformt sein. Ein derart geformter Filter kann besonders vorteilhaft in einer Ausnehmung der Fördereinheit angeordnet sein. Der Filter kann zusätzlich eine sich wenigstens teilweise in Umfangsrichtung erstrekkende Wellung aufweisen, um eine besonders große Filterfläche zu ermöglichen. Die Kegelform des Filters muss nicht zwangsläufig spitz zulaufen. Es ist auch möglich, dass der Kegel abgeschnitten ist und so eine Art Konus bzw. einen Kegelstumpf bildet. Zudem ist es auch möglich, dass der Kegel an der kleineren Seite abgerundet ist.

Außerdem existiert bei der Vorrichtung, für Luftblasen von jeder beliebigen Stelle des Zwischenraum aus ein Strömungsweg aus dem Zwischenraum in den Tank, der ausgehend von der beliebigen Stelle hin zu dem Tank kontinuierlich ansteigt. Klar ist dabei, dass hierbei die Position der Vorrichtung im verbauten Zustand betrachtet wird (schließlich wird der Strömungsweg der Luftblase von der Gravitationskraft mitbestimmt), wobei diese für den Fachmann auch schon anhand der Anschlüsse vor der tatsächlichen Montage erkennbar ist und er somit auch dieses funktionale Merkmal allein an der Vorrichtung prüfen kann. Zur Beurteilung des kontinuierlichen Ansteigens des Strömungswegs ist die typische Ausrichtung der Vorrichtung im eingebauten Zustand heranzuziehen. Im eingebauten Zustand steigt die geodätische Lage des Strömungswegs ausgehend von der beliebigen Stelle zurück in den Tank kontinuierlich an. Auf diese Art und Weise kann erreicht werden, dass sich in dem Zwischenraum keine Luftblasen sammeln, sondern Luftblasen aus dem Zwischenraum immer automatisch in den Tank aufsteigen. Vorzugsweise ist der Zwischenraum so gestaltet, dass auch bei einer leichten Schräglage der Vorrichtung der kontinuierlich ansteigende Strömungsweg für Luftblasen von jeder beliebigen Stelle des Zwischenraums aus erhalten bleibt. Vorzugsweise gilt dies bis zu einer Schräglage bis zu 20° Neigung von der Normalposition. Dies kann durch einen abgeschrägten oberen Bereich der Ausnehmung erreicht werden. "Kontinuierlich" soll in diesem Zusammenhang ausdrücken, dass die Luftblasen auf ihrem Strömungsweg nicht fallen, sondern zumindest ihre geodätische Lage halten oder erhöhen.

Bevorzugt ist, dass die Luftblasen auf jedem Strömungsweg ihre geodätische Lage nach oben hin stets erhöhen, wobei dies nicht mit konstantem Maß erfolgen muss. Weiter erscheint auch klar, dass dieses Strömungsverhalten der Luftblasen hier unter einem Zustand betrachtet wird, wenn die Vorrichtung (still) steht und somit (praktisch) keine Strömung des Reduktionsmittels im Tank vorliegt. Weiter wird insbesondere davon ausgegangen, dass dieses Strömungsverhalten der Luftblase auch dann gegeben ist, wenn ein Filter in der Ausnehmung platziert ist.

Im Rahmen der Erfindung wird auch ein Kraftfahrzeug beansprucht, aufweisend eine Verbrennungskraftmaschine, eine Abgasbehandlungsvorrichtung zur Reinigung der Abgase der Verbrennungskraftmaschine und eine Vorrichtung zur Bereitstellung von Reduktionsmittel für die Abgasbehandlungsvorrichtung. Das Kraftfahrzeug ist insbesondere ein PKW oder LKW. Weiter umfasst die Abgasbehandlungsvorrichtung insbesondere ein Abgasleitungssystem, in dem ein SCR-Katalysator platziert ist, wobei stromauf vor dem SCR-Katalysator das Reduktionsmittel mit einer Dosiervorrichtung bzw. mit der Fördereinheit bedarfsgerecht zugegeben werden kann. Dies kann von einer Kontrolleinheit in Abstimmung mit den aktuellen Betriebssituationen des Kraftfahrzeugs bzw. der Abgasbehandlungsvorrichtung geregelt werden.

Die Erfindung findet insbesondere Anwendung im eingangs geschilderten technischen Gebiet, so dass auch diese Erläuterungen zur näheren Beschreibung des Umfelds der Erfindung herangezogen werden können.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erste Vorrichtung zur Bereitstellung von Reduktionsmittel,
- Fig. 2:: eine zweite Vorrichtung zur Bereitstellung von Reduktionsmittel,
- Fig. 3:: eine dritte Vorrichtung zur Bereitstellung von Reduktionsmittel,
- Fig. 4:: einen Filter für eine Vorrichtung zur Bereitstellung von Reduktionsmittel,
- Fig. 5:: ein Ausführmgsberspiel einer erfindergsgemäßen Vorrichtung zur Bereitstellung von Reduktionsmittel, und
- Fig. 6:: ein Kraftfahrzeug aufweisend eine Vorrichtung zur Bereitstellung von Reduktionsmittel.

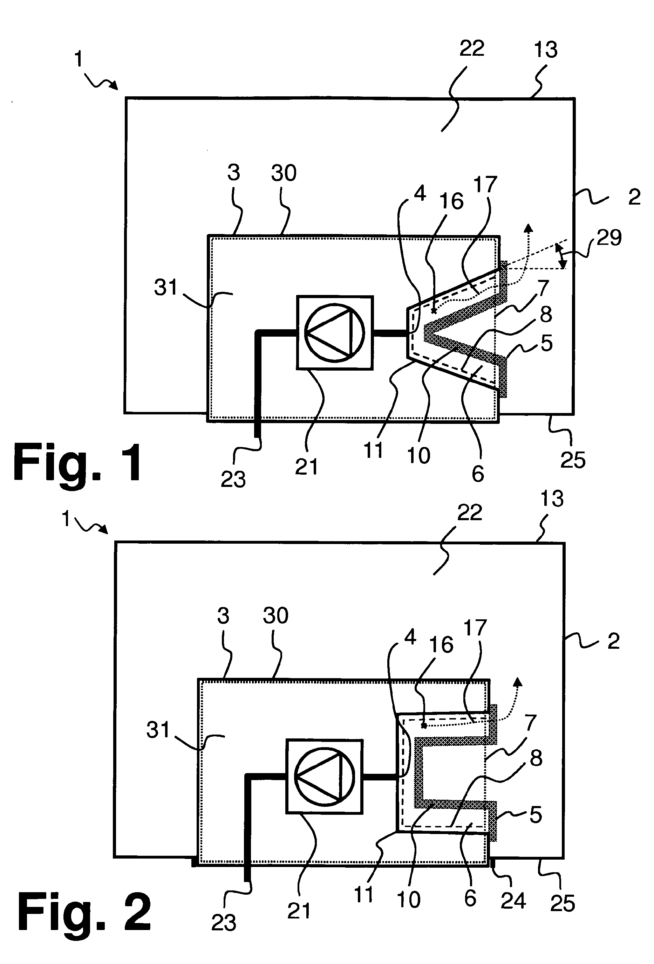

Die in den Fig. 1, 2 und 3 übereinstimmenden Merkmale werden zunächst gemeinsam erläutert, um anschließend auf die Unterschiede zwischen den in den Fig. 1, 2 und 3 dargestellten Vorrichtungen 1 einzugehen. Die einzelnen in den Figuren dargestellten Merkmale sind in beliebiger Weise miteinander kombinierbar.

Die Figuren zeigen jeweils die Vorrichtung 1, aufweisend einen Tank 2 und eine in dem Tank 2 angeordnete Fördereinheit 3, welche sich ausgehend vom Tankboden 25 in einen Tankinnenraum 22 hinein erstreckt. Die Fördereinheit 3 umfasst jeweils ein Gehäuse 30, in welchem sich eine Kammer 31 mit einer Pumpe 21 zur Förderung von Reduktionsmittel aus dem Tankinnenraum 22 hinaus befindet. Die Fördereinheit 3 hat jeweils einen Anschluss 23, an welchen eine Leitung zur Förderung des Reduktionsmittels zu einer Abgasbehandlungsvorrichtung anschließbar ist. Die Pumpe 21 entnimmt dem Tankinnenraum 22 das Reduktionsmittel an einer Ansaugstelle 4. Die Fördereinheit 3 hat jeweils eine Grundform 7, die insbesondere durch das Gehäuse 30 vorgegeben ist. Die Grundform 7 ist gemäß den Fig. 1, 2 und 3 jeweils etwa ein Zylinder. Gemäß den Fig. 1, 2 und 3 ist die Fördereinheit 3 jeweils am Tankboden 25 angeordnet und erstreckt sich von dort ausgehend zu einer Oberseite 13 des Tanks 2, erstreckt sich aber nicht über die gesamte Tankhöhe.

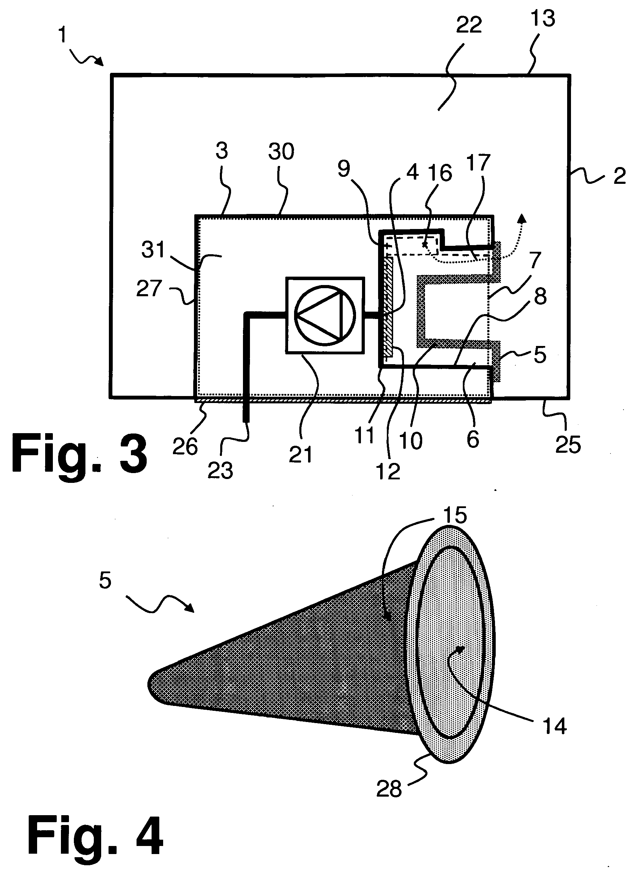

In Fig. 2 ist beispielhaft gezeigt, dass die Fördereinheit 3 in eine Öffnung 24 im Tankboden 25 eingesetzt sein kann. Alternativ ist es auch möglich, dass die Fördereinheit 3 bzw. ein Gehäuse der Fördereinheit 3 integrierter Bestandteil des Tankbodens 25 ist und sich der Tankboden 25 im Bereich der Fördereinheit 3 als Gehäuse der Fördereinheit 3 fortsetzt und dazu eine Einstülpung 27 des Tankbodens 25 bildet. Diese Variante ist in Fig. 3 beispielhaft gezeigt. Um die Fördereinheit 3 abzudichten, kann die Einstülpung 27 durch einen Deckel 26 verschlossen sein. Die Einstülpung 27 des Tankbodens 25 und der Deckel 26 bilden dann ein Gehäuse der Fördereinheit 3. In die Grundform 7 der Fördereinheit 3 hinein erstreckt sich eine Ausnehmung 8. Die Ansaugstelle 4 befindet sich in der Ausnehmung 8. Die Ansaugstelle 4 (und ein Bereich darum in der Ausnehmung 8) wird von einem Filter 5 verdeckt, so dass sich zwischen einem Wandabschnitt 11 der Fördereinheit 3 und einer Filterwand 10 des Filters 5 ein Zwischenraum 6 ausbildet.

Gemäß den Ausgestaltungen der Vorrichtung 1 in den Fig. 1 und 2 ist die Ausnehmung 8 jeweils frei von Hinterschnitten ausgeführt. Zur Veranschaulichung eines Hinterschnitts 9 ist in Fig. 3 eine Ausnehmung 8 mit einem Hinterschnitt 9 dargestellt.

In den Fig. 1 und 2 ist gezeigt, dass ausgehend von jeder beliebigen Stelle 16 des Zwischenraums 6 für Luftblasen ein Strömungspfad 17 in den Tank 2 bzw. in den Tankinnenraum 22 existiert, der kontinuierlich ansteigt. In der Fig. 3 ist ebenfalls eine beliebige Stelle 16 in dem Zwischenraum 6 markiert. Diese befindet sich jedoch in einem Hinterschnitt 9 der Ausnehmung 8. Der Strömungspfad 17 gemäß der Fig. 3 steigt daher nicht kontinuierlich an und eine Luftblase könnte sich im Bereich der Ausnehmung 8 festsetzen.

In Fig. 1 ist beispielhaft gezeigt, dass die Ausnehmung 8 im oberen Bereich sogar einen zur Oberseite 13 des Tanks 2 hin ausgerichteten Winkel 29 hat. Der Winkel 29 beträgt vorzugsweise mehr als 10° und besonders bevorzugt mehr als 20°. Dies ermöglicht, dass auch bei einer Schräglage der Vorrichtung 1 bzw. des Tanks 2 ausgehend von einer beliebigen Stelle 16 des Zwischenraums 6 für Luftblasen ein Strömungspfad 17 in den Tank 2 bzw. in den Tankmnenraum 22 existiert, der kontinuierlich ansteigt.

Der Zwischenraum 6 ist gemäß den Ausgestaltungen der Vorrichtung 1 in den Fig. 1 und 2 darüber hinaus frei von Einbauten 12 bzw. Einlagen. Einbauten 12 können beispielsweise kompressibel sein und/oder nach Art eines Schwamms und in dem Zwischenraum 6 positioniert sein. In der Fig. 3 sind zur Veranschaulichung Einbauten 12 dargestellt.

Der Filter kann unterschiedlich gestaltet sein. In der Fig. 1 ist ein konisch, bzw. nach Art eines Kegels geformter Filter 5 dargestellt, welcher sich in die Ausnehmung 8 hinein erstreckt. Die Fig. 2 und 3 zeigen jeweils einen zylindrischen Filter 5, welcher sich in die Ausnehmung 8 hinein erstreckt. Bevorzugt ist generell, dass der Filter, wenn er in der Ausnehmung positioniert ist, diese nicht überragt, also praktisch sich nur in einer Region innerhalb der Ausnehmung erstreckt.

Zur Veranschaulichung ist ein Beispiel für einen Filter 5 in der Fig. 4 im Detail dargestellt. Zu erkennen ist ein kegelförmig geformter Filter 5 mit einem abgerundeten Ende, welcher eine Innenseite 14 und eine Außenseite 15 aufweist. Wenn man Fig. 1 und 4 zusammen betrachtet, ist erkennbar, dass die Innenseite 14 des Filters 5 sich hin zum Tankinnenraum 22 des Tanks 2 erstreckt, während die Außenseite 15 des Filters 5 den Zwischenraum 6 begrenzt. Zu erkennen ist weiter ein Kragen 28 des Filters 5, mit welchem der Filter 5 an dem Gehäuse einer Fördereinheit anliegen bzw. montiert sein kann.

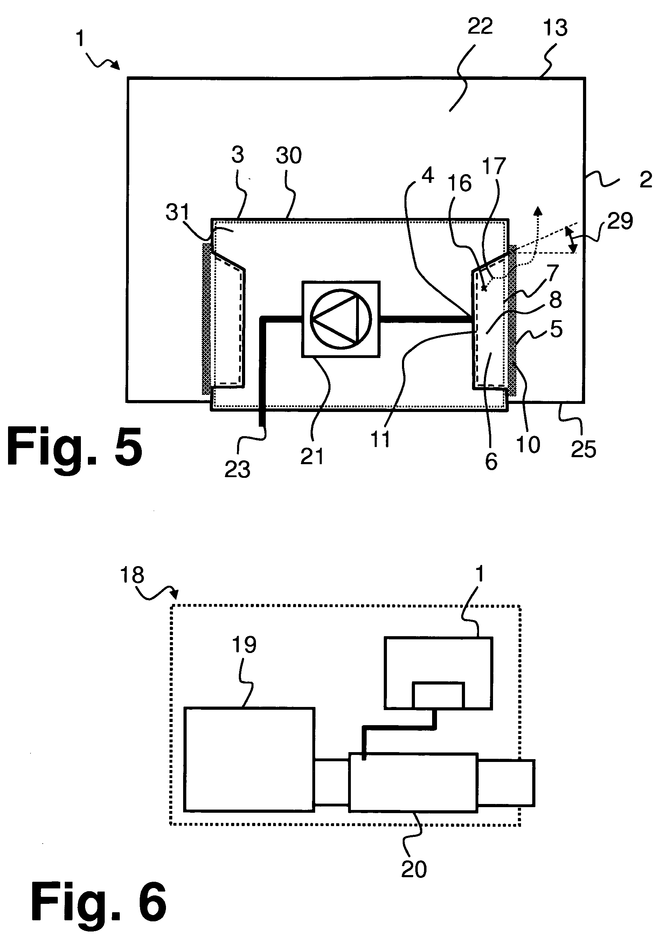

Fig. 5 zeigt eine Ausführungsvariante einer Vorrichtung 1 zur Bereitstellung von Reduktionsmittel. Auch diese Variante weist einen Tank 2 auf, in welchem eine Fördereinheit 3 angeordnet ist, die sich ausgehend von dem Tankboden 25 in den Tankinnenraum 22 hinein zu einer Oberseite 13 des Tanks erstreckt. Die Fördereinheit 3 entnimmt dem Tank 2 Reduktionsmittel über die Ansaugstelle 4. Das Reduktionsmittel wird von der Ansaugstelle 4 ausgehend mit der Pumpe 21 zu dem Anschluss 23 gefördert. An den Anschluss 23 kann eine Reduktionsmittelleitung angeschlossen werden, welche zu einer Abgasbehandlungsvorrichtung führt. Im Bereich der Ansaugstelle 4 weist die Fördereinheit 3 eine Ausnehmung 8 auf, die sich über den gesamten Umfang der Fördereinheit 3 erstreckt. Die Ausnehmung 8 erstreckt sich in die Grundform 7 der Fördereinheit als umlaufende Einbuchtung hinein. Die Ausnehmung 8 ist von einem Filter 5 verdeckt bzw. überspannt, welcher ebenfalls umlaufend ausgestaltet ist. Zwischen dem Filter bzw. der Filterwand 10 des Filters 5 und der Fördereinheit 3 bzw. einem Wandabschnitt 11 der Fördereinheit 3 existiert ein Zwischenraum 6. Der Zwischenraum 6 umfasst die vollständige Ausnehmung 8. Druck, welcher beim Einfrieren von Reduktionsmittel in dem Zwischenraum 6 entsteht, kann in den Tank 2 abgeleitet werden. Insbesondere im oberen Bereich ist die Ausnehmung 8 mit einem Winkel 29 von zumindest 10°, vorzugsweise zumindest 20° hin zur Oberseite 13 des Tanks 2 abgeschrägt. So ergibt sich selbst bei einer Schräglage der Vorrichtung 1 von einer beliebigen Stelle 16 des Zwischenraums 6 aus für Luftblasen ein Strömungspfad 17 aus dem Zwischenraum 6 zurück in den Tank 2 bzw. in den Tankinnenraum 22, welcher kontinuierlich ansteigt. So können Luftblasen einfach aus dem Zwischenraum 6 hinaus gelangen.

Fig. 6 zeigt ein Kraftfahrzeug 18, aufweisend eine Verbrennungskraftmaschine 19 und eine Abgasbehandlungsvorrichtung 20 zur Reinigung der Abgase der Verbrennungskraftmaschine 19. Das Kraftfahrzeug 18 weist auch eine Vorrichtung 1 auf, mit der Reduktionsmittel für die Abgasbehandlungsvorrichtung 20 bereitgestellt werden kann.

Somit ist hier eine besonders kostengünstige und besonders einfrierbeständige Vorrichtung zur Bereitstellung von Reduktionsmittel vorgeschlagen, die insbesondere in der eingangs geschilderten Anwendung eine deutliche Verbesserung zur Vermeidung der angesprochenen Probleme bewirkt.

### Bezugszeichenliste

- 1: Vorrichtung
- 2: Tank
- 3: Fördereinheit
- 4: Ansaugstelle
- 5: Filter
- 6: Zwischenraum
- 7: Grundform
- 8: Ausnehmung
- 9: Hinterschnitt
- 10: Filterwand
- 11: Wandabschnitt
- 12: Einbauten
- 13: Oberseite
- 14: Innenseite
- 15: Außenseite
- 16: beliebige Stelle
- 17: Strömungspfad
- 18: Kraftfahrzeug
- 19: Verbrennungskraftmaschine
- 20: Abgasbehandlungsvorrichtung
- 21: Pumpe
- 22: Tankinnenraum
- 23: Anschluss
- 24: Öffnung
- 25: Tankboden
- 26: Deckel
- 27: Einstülpung
- 28: Kragen
- 29: Winkel
- 30: Gehäuse
- 31: Kammer

## Patentansprüche

1. Vorrichtung (1) zur Bereitstellung von flüssigem Reduktionsmittel, aufweisend einen Tank (2), eine zumindest teilweise in dem Tank (2) angeordnete Fördereinheit (3) mit einer Ansaugstelle (4), durch welche die Fördereinheit (3) Reduktionsmittel aus dem Tank (2) ansaugen kann, und mit einem Filter (5), welcher die Ansaugstelle (4) bedeckt, wobei ein Zwischenraum (6) zwischen der Fördereinheit (3) und dem Filter (5) ausgebildet ist und wobei der Filter (5) derart an der Fördereinheit (3) angeordnet ist, dass dieser eine Ausweichbewegung weg von der Ansaugstelle (4) ausführen kann, wenn sich im Zwischenraum (6) Eis bildet, wobei die Fördereinheit (3) eine Grundform (7) und eine sich in die Grundform (7) hinein erstreckende umlaufende Ausnehmung (8) hat, in welcher sich die Ansaugstelle (4) und der Filter (5) befindet **dadurch gekennzeichnet, daß** die Ausnehmung (8) mit einem abgeschrägten oberen Bereich ausgeführt ist, so dass für Luftblasen von jeder beliebigen Stelle (16) des Zwischenraums (6) aus ein Strömungspfad (17) aus dem Zwischenraum (6) in den Tank (2) existiert der ausgehend von der beliebigen Stelle (16) hin zu dem Tank (2) kontinuierlich ansteigt.

2. Vorrichtung (1) nach Patentanspruch 1, wobei die Ausnehmung (8) zumindest frei von Hinterschnitten (9) ist oder sich zum Tank (2) hin erweitert.

3. Vorrichtung (1) nach einem der vorhergehenden Patentansprüche, wobei der Filter (5) eine Hohlfilter ist, welcher eine Innenseite (14) und eine Außenseite (15) hat, und die Innenseite (14) des Filters (5) hin zum Tank (2) geöffnet ist, während die Außenseite (15) hin zum Zwischenraum (6) angeordnet ist.

4. Vorrichtung (1) nach einem der vorhergehenden Patentansprüche, wobei der Zwischenraum (6) frei von Einbauten (12) ist.

5. Vorrichtung (1) nach einem der vorhergehenden Patentansprüche, wobei der Filter (5) nach Art eines Kegels geformt ist.

6. Vorrichtung (1) nach einem der vorhergehenden Patentansprüche, wobei der abgeschrägte obere Bereich der Ausnehmung so ausgeführt ist, dass bis zu einer Schräglage der Vorrichtung bis zu 20° Neigung von der Normal-position der kontinuierlich ansteigende Strömungspfas (17) für Luftblasen von jeder beliebigen Stelle (16) des Zwischenraums (6) aus erhalten bleibt

7. Kraftfahrzeug (18) aufweisend eine Verbrennungskraftmaschine (19), eine Abgasbehandlungsvorrichtung (20) zur Reinigung der Abgase der Verbrennungskraftmaschine (19) und eine Vorrichtung (1) nach einem der vorhergehenden Patentansprüche zur Bereitstellung von Reduktionsmittel für die Abgasbehandlungsvorrichtung (20).

## Claims

1. Device (1) for supplying liquid reducing agent, having a tank (2), having a delivery unit (3) which is at least partially arranged in the tank (2) and which has an intake point (4) through which the delivery unit (3) can draw in reducing agent from the tank (2), and having a filter (5) which covers the intake point (4), wherein an intermediate space (6) is formed between the delivery unit (3) and the filter (5), and wherein the filter (5) is arranged on the delivery unit (3) such that said filter can perform a deflection movement away from the intake point (4) if ice forms in the intermediate space (6), wherein the delivery unit (3) has a basic shape (7) and an encircling recess (8) which extends into the basic shape (7) and in which the intake point (4) and the filter (5) are situated, **characterized in that** the recess (8) is configured with an oblique upper region such that, from any arbitrary point (16) of the intermediate space (6), a flow path (17) for air bubbles out of the intermediate space (6) into the tank (2) exists which rises continuously from the arbitrary point (16) to the tank (2).

2. Device (1) according to Patent Claim 1, wherein the recess (8) is at least free from undercuts (9) or widens toward the tank (2).

3. Device (1) according to one of the preceding patent claims, wherein the filter (5) is a hollow filter which has an inner side (14) and an outer side (15), and the inner side (14) of the filter (5) is open toward the tank (2), whereas the outer side (15) is arranged toward the intermediate space (6).

4. Device (1) according to one of the preceding patent claims, wherein the intermediate space (6) is free from fixtures (12).

5. Device (1) according to one of the preceding patent claims, wherein the filter (5) is of conical form.

6. Device (1) according to one of the preceding patent claims, wherein the oblique upper region of the recess is configured in such a way that the continuously rising flow path (17) for air bubbles from any arbitrary point (16) of the intermediate space (6) is maintained up to an oblique position of the device of up to 20° inclination with respect to the normal position.

7. Motor vehicle (18) having an internal combustion engine (19), having an exhaust-gas treatment device (20) for the purification of the exhaust gases of the internal combustion engine (19), and having a device (1) according to one of the preceding patent claims for supplying reducing agent for the exhaust-gas treatment device (20).

## Revendications

1. Dispositif (1) d'alimentation en agent réducteur liquide, comprenant un réservoir (2), une unité (3) d'acheminement disposée au moins en partie dans le réservoir (2) et ayant un point (4) d'aspiration, par lequel l'unité (3) d'acheminement peut aspirer de l'agent réducteur hors du réservoir (2), et un filtre (5), qui recouvre le point (4) d'aspiration, un espace (6) intermédiaire étant formé entre l'unité (3) d'acheminement et le filtre (5) et le filtre (5) étant monté sur l'unité (3) d'acheminement, de manière à pouvoir exécuter un mouvement d'évitement l'éloignant du point (4) d'aspiration, s'il se forme du givre dans l'espace (3) intermédiaire, l'unité (3) d'acheminement ayant une forme (7) de base et un évidement (8) qui fait le tour, qui s'étend à l'intérieur de la forme (7) de base et dans lequel se trouvent le point (4) d'aspiration et le filtre (5), **caractérisé en ce que** l'évidement (8) est réalisé en ayant une partie supérieure biseautée, de sorte qu'il existe, pour des bulles d'air à partir de n'importe quel point (16) de l'espace (6) intermédiaire, un trajet (17) d'écoulement de l'espace (6) intermédiaire au réservoir (2), qui monte continuellement de n'importe quel point (16) au réservoir (2).

2. Dispositif (1) suivant la revendication 1, dans lequel l'évidement (8) est au moins sans contre-dépouille (9) ou s'élargit en allant vers le réservoir (2).

3. Dispositif (1) suivant l'une des revendications précédentes, dans lequel le filtre (5) est un filtre creux, qui a une face (14) intérieure et une face (15) extérieure, et la face (14) intérieure du filtre (5) est ouverte vers le réservoir (2), tandis que la face (15) extérieure est disposée vers l'espace (6) intermédiaire.

4. Dispositif (1) suivant l'une des revendications précédentes, dans lequel l'espace (6) intermédiaire est sans garnissage (12).

5. Dispositif (1) suivant l'une des revendications précédentes, dans lequel le filtre (5) est conformé à la manière d'un cône.

6. Dispositif (1) suivant l'une des revendications précédentes, dans lequel la partie supérieure biseautée de l'évidement est réalisée de manière à laisser subsister jusqu'à une longueur de biseau du dispositif, allant jusqu'à une inclinaison de 20° par rapport à la position normale, du trajet (17) d'écoulement ascendant continuellement pour des bulles d'air de n'importe quel point (16) de l'espace intermédiaire.

7. Véhicule (18) automobile ayant un moteur (19) à combustion interne, un dispositif (20) de traitement des gaz d'échappement pour l'épuration des gaz d'échappement du moteur (19) à combustion interne et un dispositif (1) suivant l'une des revendications précédentes, pour l'alimentation en agent réducteur du dispositif (20) de traitement des gaz d'échappement.
